# EUROPÄISCHE PATENTSCHRIFT

(11) **EP 1 245 026 B1**
(45) Veröffentlichungstag und Bekanntmachung des Hinweises auf die Patenterteilung: **11.06.2003**
(21) Anmeldenummer: 00983009.2
(22) Anmeldetag: 14.10.2000
(51) Int. Cl.: G11B 7/09, G11B 21/10

(54) **VERFAHREN ZUR REGELUNG DER NACHFÜHRUNG EINER ABTASTVORRICHTUNG UND LAUFWERK DAFÜR**
METHOD FOR REGULATING THE TRACKING OF A SCANNING DEVICE AND DRIVE FOR THE SAME
PROCEDE DE REGLAGE DU GUIDAGE PRECIS D'UN DISPOSITIF DE BALAYAGE ET LECTEUR ASSOCIE

(30) Priorität: 17.11.1999 DE 19955251
(43) Veröffentlichungstag der Anmeldung: 02.10.2002
(73) Patentinhaber: ROBERT BOSCH GMBH, 70442 Stuttgart (DE)
(72) Erfinder: HERMANNS, Ingo, 31135 Hildesheim (DE)
(86) Internationale Anmeldenummer: DE0003626
(87) Internationale Veröffentlichungsnummer: WO01037271

(56) Entgegenhaltungen:
- EP-A- 0 217 460
- EP-A- 0 735 522
- US-A- 4 692 915
- PATENT ABSTRACTS OF JAPAN vol. 015, no. 480 (P-1284), 5. Dezember 1991 (1991-12-05) & JP 03 207063 A (MATSUSHITA ELECTRIC IND CO LTD), 10. September 1991 (1991-09-10)

## Beschreibung

### Stand der Technik

Die Erfindung geht von einem Verfahren zur Regelung der Nachführung einer Abtastvorrichtung und von einem Laufwerk dafür nach der Gattung der unabhängigen Ansprüche aus.

Aus der DE 196 42 343 ist ein Verfahren zum Regeln der Fokussierung eines zum Lesen von Daten auf einen rotierenden Aufzeichnungsträger gerichteten Lichtstrahls einer Abtastvorrichtung auf den Aufzeichnungsträger und der Führung des Lichtstrahls entlang den Datenspuren des Aufzeichnungsträgers durch jeweils einen Regelkreis bekannt. Dabei ist beispielsweise eine Spurregelschleife vorgesehen, die einen Leistungsverstärker enthält. Mit dem Leistungsverstärker ist ein Aktuator verbunden, der die Regelposition eines Objektivs eines Lesekopfes in der Spurebene mit einer Kraft F_{T} einstellt. Die Position des Objektivs in Bezug zu einer Compact-Disc wird durch auf dem Lesekopf montierte Referenzphotodioden gemessen. Durch Krafteinwirkung auf das Objektiv in Spurebene wird der Abstand Y₀ des Objektivs vom Lesekopf verändert. Eine durch die Änderung des Abstandes Y0 herbeigeführte Positionsstörung wird zusammen mit allen Positionsstörgrößen in Spurebene für die Bewegung des Objektivs in Bezug zur Compact-Disc an einem ersten Summationspunkt addiert. Daraus ergibt sich ein Gesamtpositionsfehler ΔY der Spurregelung in Spurebene. Ein Positionsaufnehmer wandelt den gesamt Positionsfehler ΔY in das elektrische Positionsfehlersignal TE um. Dem Positonsfehlersignal TE werden an einem zweiten Summationspunkt parasitäre Signale E₁T überlagert, die von Defekten auf der Compact-Disc herrühren und die Positionsbestimmung in Spurebene stören. Das sich ergebende Signal V_{T} wird auf ein Korrekturnetzwerk der Spurregelung gegeben. Dabei handelt es sich um einen elektronischen Schaltkreis, dessen Funktion die eines Filters ist, und die die Stabilität und die statische und dynamische Genauigkeit der Regelung gewährleisten muß. Das Ausgangssignal des Korrekturnetzwerkes wird dann auf den Leistungsverstärker gegeben. Durch eine solche Regelschleife kann der Lesekopf auf eine bestimmte Spur auf der Oberfläche der Compact-Disc positioniert werden. Weiterhin können Ungenauigkeiten im Rundlauf, der Lagerung oder Fertigung von Baugruppen des Compact-Disc-Laufwerks ausgeglichen werden. Schließlich können durch externe Beschleunigungen, wie bspw. Vibrationen hervorgerufene Positionierungsfehler des Lesekopfes in Bezug zur Compact-Disc ausgeglichen werden.

Aus den Dokumenten EP-A-0 217 460, EP-A-0 735 522 und US-A-4 692 915 sind Vorrichtungen zum Lesen von Informationen von einem Datenträger bekannt, welche separate Beschleunigungsaufnehmer verwenden, um einen Abtastkopf bei Stößen und Vibrationen nachzuführen. JP-A-03 207063 beschreibt für ein Laufwerk für Speichermedien ein Verfahren zum Ausgleich der Vibrationen, die im Laufwerk durch die Bewegung des Lesekopfes erzeugt werden.

### Vorteile der Erfindung

Das erfindungsgemäße Verfahren zur Regelung der Nachführung einer Abtastvorrichtung und das erfindungsgemäße Laufwerk für Speichermedien mit den Merkmalen der unabhängigen Ansprüche haben demgegenüber den Vorteil, daß auf die Abtastvorrichtung einwirkende Beschleunigungen in einer Bewegungsrichtung des mindestens einen Aktuators gemessen werden und daß aus den gemessenen Beschleunigungen ein Korrektursignal abgeleitet und dem mindestens einen Aktuator zugeführt wird, wobei der Aktuator durch das Korrektursignal derart angesteuert wird, daß er den auf die Abtastvorrichtung wirkenden Beschleunigungen entgegenwirkt.

Auf diese Weise ist eine frühzeitige Kompensierung der auf die Abtastvorrichtung wirkenden Beschleunigungen möglich, ohne daß deren Auswirkungen auf die Positionierung der Abtastvorrichtung in Bezug auf das Speichermedium abgewartet werden muß. Eine Positionsregelschleife zur Regelung der Position der Abtastvorrichtung in Bezug auf das Speichermedium kann dann mit geringerer Schleifenverstärkung betrieben werden, da sie nicht zur Unterdrückung der Einflüsse von externen Beschleunigungen z.B. aufgrund von Vibrationen verwendet werden muß. Eine niedrige Schleifenverstärkung ist deshalb wünschenswert, weil Beschädigungen auf der Oberfläche des Speichermediums zu Verfälschungen der Positionsregelung für die Abtastvorrichtung führen können. Diese verfälschten Signale würden dann in ein fehlerhaftes Ansteuersignal für den Aktuator umgewandelt, wodurch es zu einer Fehlpositionierung der Abtastvorrichtung und damit zu Funktionsstörungen bei der Wiedergabe oder beim Beschreiben des Speichermediums kommt. Bei niedriger Schleifenverstärkung können solche Fehlpositionierungen und Funktionsstörungen aufgrund von Oberflächenbeschädigungen des Speichermediums in ihrer Auswirkung reduziert werden.

Besonders vorteilhaft ist es, daß der mindestens eine Aktuator als Beschleunigungssensor verwendet wird. Auf diese Weise läßt sich der Bauteileaufwand für die Realisierung des erfindungsgemäßen Verfahrens und des erfindungsgemäßen Laufwerks erheblich reduzieren, da bereits vorhandene Komponenten zur Beschleunigungsmessung mitgenutzt werden, so daß deren Funktionalität erhöht wird.

Durch die in den Unteransprüchen aufgeführten Maßnahmen sind vorteilhafte Weiterbildungen und Verbesserungen des Verfahrens zur Regelung der Nachführung einer Abtastvorrichtung und des Laufwerks für Speichermedien gemäß den unabhängigen Ansprüchen möglich.

### Zeichnung

Ausführungsbeispiele der Erfindung sind in der Zeichnung dargestellt und in der nachfolgenden Beschreibung näher erläutert. Es zeigen Figur 1 ein Blockschaltbild eines Laufwerks für Speichermedien gemäß dem Stand der Technik, Figur 2 ein Blockschaltbild eines erfindungsgemäßen Laufwerks in einer ersten Ausführungsform, Figur 3 ein Blockschaltbild eines erfindungsgemäßen Laufwerks in einer zweiten Ausführungsform und Figur 4 ein Blockschaltbild eines Aktuators nach der Erfindung.

### Beschreibung der Ausführungsbeispiele

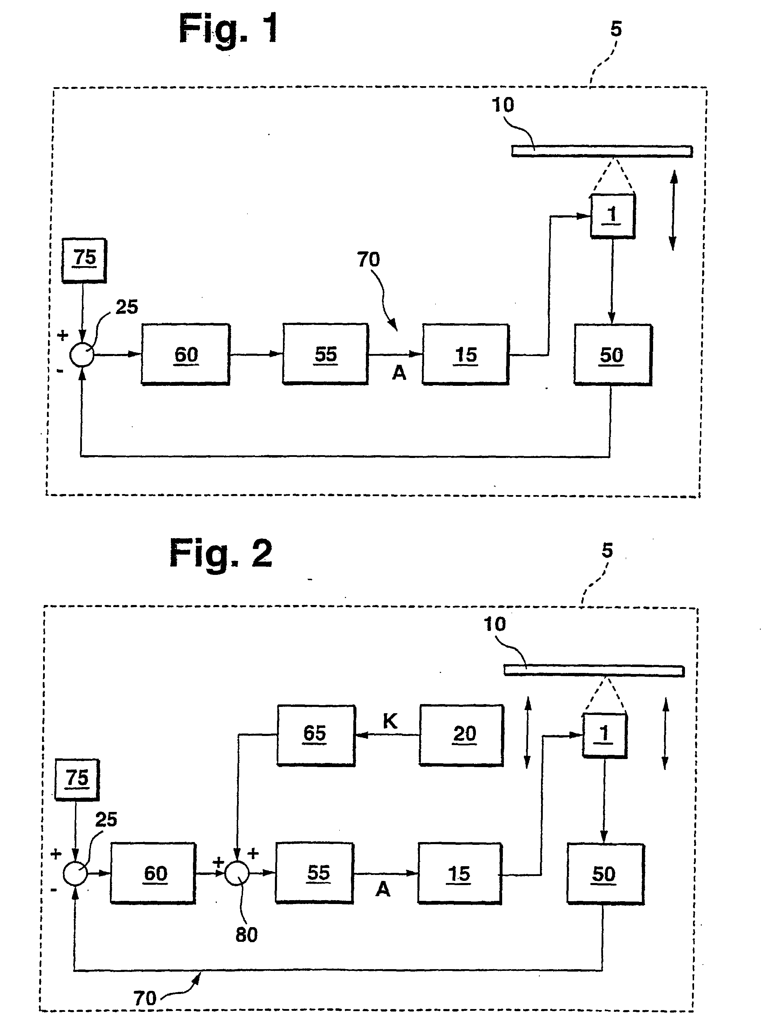

In Figur 1 kennzeichnet 5 ein Laufwerk für ein Speichermedium 10. Bei dem Speichermedium 10 kann es sich um ein optisches, ein magnetisches oder ein magneto-optisches Speichermedium handeln. Ist das Speichermedium 10 als optisches Speichermedium ausgebildet, kann es sich beispielsweise um eine Compact-Disc, eine DVD (Digital Versatile Disc) oder eine CD-ROM handeln. Ist das Speichermedium 10 als magneto-optisches Speichermedium ausgebildet, kann es sich beispielsweise um eine MOD (Magneto Optical Disc), insbesondere in Form einer MD (Minidisc) handeln. Das Laufwerk 5 umfaßt eine Abtastvorrichtung 1 zum Lesen und/oder Schreiben von Daten auf dem Speichermedium 10. Zum Abtasten von optischen Speichermedien kann dabei die Abtastvorrichtung 1 beispielsweise als optischer Schreib-/Lesekopf ausgebildet sein, der das Speichermedium 10 mittels eines Laserstrahls abtastet, wobei das Speichermedium 10 als optisches Speichermedium ausgebildet ist, dessen Daten in sogenannten Datenspuren abgespeichert sind. Die Abtastvorrichtung 1 kann jedoch zum Abtasten von magnetischen Speichermedien 10 beispielsweise auch als magnetischer Schreib-/Lesekopf ausgebildet sein.

Durch externe Beschleunigungen des Laufwerks 5, beispielsweise aufgrund von Vibrationen, wird die Position der Abtastvorrichtung 1 in Bezug auf das Speichermedium 10 beeinflußt, so daß es zu Fehlabtastungen kommt. Die Beschleunigungen können dabei in beliebiger Richtung auftreten. Bei einem plattenförmig ausgebildeten Speichermedium 10 können beispielsweise Beschleunigungen auftreten, deren Richtung in der Ebene des Speichermediums 10 liegen, sowie Beschleunigungen, deren Richtung senkrecht zur Ebene des Speichermediums 10 liegen. Im folgenden soll beispielhaft angenommen werden, daß die Daten auf einem solchen plattenförmigen Speichermedium 10 optisch gespeichert sind und daß die Abtastung des Speichermediums 10 durch die Abtastvorrichtung 1 zum Auslesen und/oder Beschreiben des Speichermediums 10 durch Fokussieren eines Laserstrahls auf eine Spur des Speichermediums 10 erfolgt. Beschleunigungen, deren Richtung in der Ebene des Speichermediums 10 liegen, können dann zum Spurverlust während des Abtastvorgangs führen, wohingegen Beschleunigungen, deren Richtung senkrecht zur Ebene des Speichermediums 10 liegen, zu einer fehlerhaften Fokussierung der abgetasteten Spur des Speichermediums 10 durch die Abtastvorrichtung 1 führen können. Zur Rückgängigmachung des Spurverlusts kann eine Spurregelschleife verwendet werden, wohingegen zur Rückgängigmachung einer Fehlfokussierung eine Fokusregelschleife verwendet werden kann. Die Erfindung soll im folgenden beispielhaft anhand einer Fokusregelschleife 70 beschrieben werden, die durch Beschleunigungen senkrecht zur Ebene des Speichermediums 10 hervorgerufene Fehlfokussierungen auf dem Speichermedium 10 rückgängig machen soll, läßt sich jedoch in entsprechender Weise auf eine Spurregelschleife zur Rückgängigmachung von Spurverlusten durch externe Beschleunigungen übertragen.

Die Fokusregelschleife 70 ist dabei in Figur 1 in vereinfachter Form dargestellt und repräsentiert den beschriebenen Stand der Technik in Bezug auf eine Regelung der Fokuseinstellung. Dabei wird die Position der Abtastvorrichtung 1 bezüglich des in das Laufwerk 5 eingeführten Speichermediums 10 von einem Positionssensor 50 gemessen, der zu diesem Zweck beispielsweise eine oder mehrere Photodioden umfassen kann, die beispielsweise auf der Abtastvorrichtung 1 montiert sein können. Der Positionssensor 50 ermittelt auf diese Weise den Abstand zwischen der Abtastvorrichtung 1 und dem Speichermedium 10 in Richtung senkrecht zur Ebene des Speichermediums 10. Der auf diese Weise gemessene Abstand stellt einen Ist-Wert dar. Entspricht der Abstand zwischen der Abtastvorrichtung 1 und dem Speichermedium 10 in Richtung senkrecht zur Ebene des Speichermediums 10 einem vorgegebenen Soll-Wert 75, so ist die Fokussierung einer Datenspur des Speichermediums 10 durch die Abtastvorrichtung 1 fehlerfrei. Durch die Fokusregelschleife 70 soll der gemessene Ist-Wert dem vorgegebenen Soll-Wert 75 nachgeführt werden, um eine möglichst fehlerfreie Fokussierung zu gewährleisten. Aufgrund von Vibrationen des Laufwerks 5, wie sie beispielsweise beim Betrieb in einem fahrenden Kraftfahrzeug auftreten, wird das Laufwerk 5 beschleunigt. Durch die unterschiedlichen Massen- und Federkonstanten des Speichermediums 10 und der Abtastvorrichtung 1 kommt es dabei zu einer Änderung des Abstandes der Abtastvorrichtung 1 vom Speichermedium 10 in Richtung senkrecht zur Ebene des Speichermediums 10, wenn eine Beschleunigung in dieser Richtung auf das Laufwerk 5 wirkt. Somit kommt es zu einer Abweichung des Ist-Wertes vom Soll-Wert 75. Der Positionssensor 50 leitet den ermittelten Ist-Wert in Form eines elektrischen Ist-Wert-Signals an eine erste Verknüpfungsvorrichtung 25 weiter. In der ersten Verknüpfungsvorrichtung 25 wird das elektrische Ist-Wert-Signal von einem aus dem Soll-Wert 75 abgeleiteten elektrischen Soll-Wert-Signal subtrahiert. Das gebildete Differenzsignal stellt ein elektrisches Fokuspositionsfehlersignal dar und wird einem ersten Filter 60 zugeführt. Die Funktion des ersten Filters 60 besteht darin, daß es die Stabilität und die statische und dynamische Genauigkeit der Fokusregelung gewährleisten muß. Am Ausgang des ersten Filters 60 liegt dann ein entsprechend gefiltertes elektrisches Fokuspositionsfehlersignal an, das einem Verstärker 55 zugeführt wird. Am Ausgang des Verstärkers 55 liegt dann ein entsprechend mit der Verstärkung des Verstärkers 55 verstärktes gefiltertes elektrisches Fokuspositionsfehlersignal an, das einem Aktuator 15 zugeführt wird. Der Aktuator 15 ist mechanisch mit der Abtastvorrichtung 1 verbunden und leitet aus dem wie beschrieben aufbearbeiteten elektrischen Fokuspositionsfehlersignal eine Kraft in Richtung senkrecht zur Ebene des Speichermediums 10 ab, die der durch die Beschleunigung hervorgerufenen Abweichung des Ist-Wertes vom Soll-Wert 75 entgegenwirkt und die Abtastvorrichtung 1 so bewegt, daß der Abstand zwischen der Abtastvorrichtung 10 und dem Speichermedium 10 in Richtung senkrecht zur Ebene des Speichermediums 10 dem Soll-Wert 75 angepaßt wird.

Die Geschwindigkeit, mit der der Ist-Wert dem Soll-Wert 75 durch die Fokusregelschleife 70 nachgeführt wird, hängt von der Höhe der insgesamt in der Fokusregelschleife 70 vorliegenden Verstärkung ab, die auch als Schleifenverstärkung bezeichnet wird. Sie kann beispielsweise durch entsprechende Einstellung der Verstärkung des Verstärkers 55 verändert werden. Je höher die Schleifenverstärkung ist, desto schneller wird der Ist-Wert dem Soll-Wert 75 nachgeführt.

Oftmals weisen Speichermedien 10 an ihrer abzutastenden Oberfläche Beschädigungen auf, die eine Positionsmessung in Fokusrichtung senkrecht zur Ebene des Speichermediums 10 verfälschen und somit einen fehlerhaften Ist-Wert liefern. In diesem Fall wird ein entsprechend verfälschtes elektrisches Ist-Wert-Signal gebildet, das am Ausgang der ersten Verknüpfungsvorrichtung 25 zu einem verfälschten elektrischen Fokuspositionsfehlersignal führt. Damit ist auch das dem Aktuator 15 vom Verstärker 55 zugeführte Signal, das auch als Aktuatorsignal A bezeichnet wird, verfälscht. Dies führt dann letztlich zu einer Fehlpositionierung der Abtastvorrichtung 1 und kann Funktionsstörungen beim Abtasten des Speichermediums 10 durch die Abtastvorrichtung 1 zur Folge haben. Solche Fehlpositionierungen der Abtastvorrichtung 1 werden durch eine hohe Schleifenverstärkung begünstigt, da diese eine schnelle Nachführung des gemessenen Ist-Wertes an den vorgegebenen Soll-Wert 75 gewährleistet, unabhängig davon, ob der gemessene Ist-Wert korrekt oder fehlerhaft ist.

Die Wahl der Schleifenverstärkung stellt daher bislang einen Kompromiß dar zwischen einer möglichst schnellen Nachführung des gemessenen Ist-Wertes an den vorgegebenen Soll-Wert 75 und einer Vermeidung von Fehlpositionierungen der Abtastvorrichtung 1 aufgrund einer zu schnellen Nachführung.

In Figur 2 ist eine weitere Ausführungsform eines Laufwerks 5 gemäß dem Stand der Technik dargestellt. Dabei kennzeichnen gleiche Bezugszeichen gleiche Elemente wie in Figur 1. Die aus der Figur 1 bekannte Fokusregelschleife 70 wird dabei wie folgt ergänzt: es ist ein Beschleunigungssensor 20 vorgesehen, der die auf das Laufwerk 5 einwirkenden Beschleunigungen mißt, die in der Richtung auftreten, in der der Aktuator 15 die Abtastvorrichtung 1 bewegen kann, d.h. senkrecht zur Ebene des in das Laufwerk 5 eingeführten Speichermediums 10. Aufgrund der bekannten Massen- und Federkonstanten des Laufwerks 5, der Abtastvorrichtung 1 und des Speichermediums 10 kann der Beschleunigungssensor 20 ein elektrisches Korrektursignal K aus den gemessenen Beschleunigungen ableiten, das dazu dienen soll, die aufgrund dieser Beschleunigungen auftretende Abweichung des Abstandes zwischen der Abtastvorrichtung 1 und dem Speichermedium 10 in Richtung senkrecht zur Ebene des Speichermediums 10 vom vorgegebenen Soll-Wert 75 zu vermeiden bzw. zu kompensieren. Das elektrische Korrektursignal K wird dabei einem zweiten Filter 65 zugeführt, das dieselbe Funktion wie das erste Filter 60 erfüllt. Am Ausgang des zweiten Filters 65 liegt dann das entsprechend gefilterte Korrektursignal an, das einem Verknüpfungsglied 80 zwischen dem ersten Filter 60 und dem Verstärker 55 zugeführt ist. Das Verknüpfungsglied 80 überlagert dabei das gefilterte Korrektursignal mit dem gefilterten Fokuspositionsfehlersignal und gibt das so gebildete Summensignal an den Verstärker 55 weiter. Der Verstärker 55 verstärkt dieses Summensignal in der beschriebenen Weise und gibt das verstärkte Summensignal als Aktuatorsignal A an den Aktuator 15 weiter. Durch den auf dem Korrektursignal K basierenden Anteil des Aktuatorsignals A wird dann die Abtastvorrichtung 1 vom Aktuator 15 in einer Weise in Richtung senkrecht zur Ebene des Speichermediums 10 bewegt, in der den Auswirkungen der auf das Laufwerk 5 wirkenden Beschleunigungen auf den Abstand zwischen der Abtastvorrichtung 1 und dem Speichermedium 10 in Richtung senkrecht zur Ebene des Speichermediums 10 entgegengewirkt wird, so daß eine Abweichung des Ist-Wertes vom Soll-Wert 75 aufgrund dieser Beschleunigungen weitgehend vermieden wird.

Eine Fehlpositionierung der Abtastvorrichtung 1 in Bezug auf das Speichermedium 10 aufgrund der auf das Laufwerk 5 wirkenden Beschleunigungen wird somit weitgehend vermieden. Die Fokusregelschleife 70 muß somit keine Fehlpositionierungen der Abtastvorrichtung 1 in Bezug auf das Speichermedium 10 aufgrund von auf das Laufwerk 5 wirkenden Beschleunigungen mehr ausgleichen, so daß eine im Vergleich zur Anordnung gemäß Figur 1 niedrigere Schleifenverstärkung der Fokusregelschleife 70 bei gleichzeitiger hoher Unterdrückung von Vibrations- oder Beschleunigungseinflüssen auf das Laufwerk 5 erreicht werden kann, so daß die Toleranz der Fokusregelschleife 70 gegenüber beschädigten Oberflächen von Speichermedien 10 erhöht werden kann.

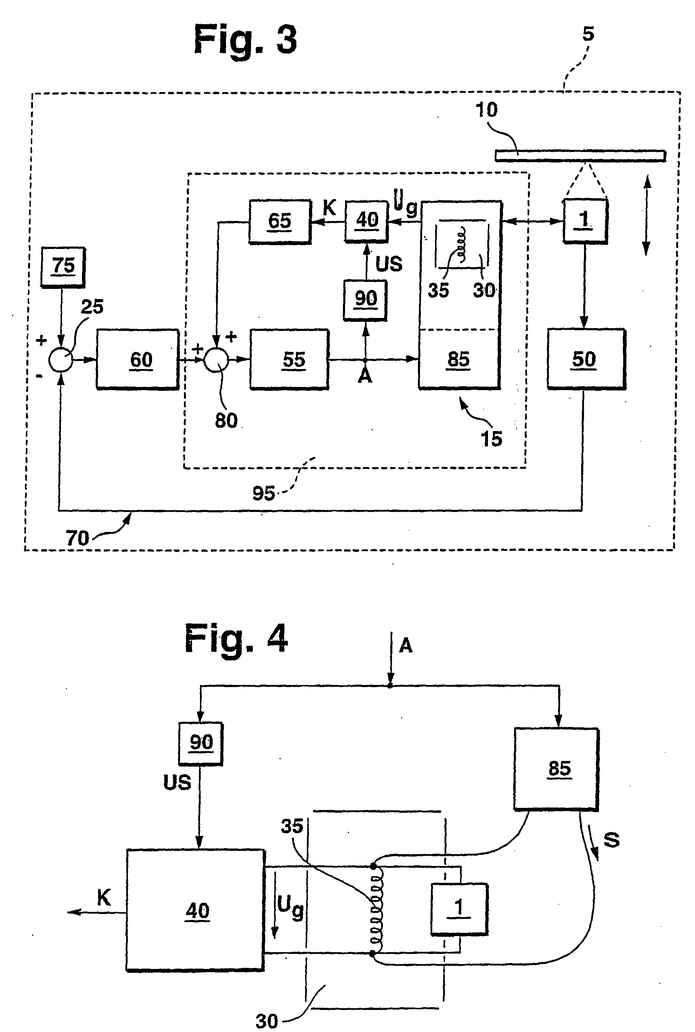

In Figur 3 ist eine Ausführungsform des erfindungsgemäßen Laufwerks 5 dargestellt, bei der gleiche Bezugszeichen gleiche Komponenten kennzeichnen wie in Figur 2. Dabei wird die aus Figur 2 bekannte Anordnung gemäß Figur 3 wie folgt abgeändert: anstelle des Beschleunigungssensors 20 liefert gemäß Figur 3 eine zweite Vergleichsvorrichtung 40 das Korrektursignal K an das zweite Filter 65. Die zweite Vergleichsvorrichtung 40 vergleicht dabei ein elektrisches Ausgangssignal Ug des Aktuators 15 mit einem elektrischen Ausgangssignal Us eines Aktuatorsimulators 90. Dem Aktuatorsimulator 90 ist dabei ebenso wie dem Aktuator 15 das Ausgangssignal des Verstärkers 55 zugeführt. Dabei wird wie auch bei der Ausführungsform gemäß Figur 2 das vom zweiten Filter 65 gefilterte Korrektursignal mit dem Ausgangssignal des ersten Filters 60 durch die Verknüpfungsvorrichtung 80 additiv überlagert und das so gebildete Summensignal dem Verstärker 55 zugeführt. Ansonsten ist der Aufbau der Fokusregelschleife 70 gemäß der Ausführungsform des erfindungsgemäßen Laufwerks 5 entsprechend der Fokusregelschleife 70 nach Figur 1 aufgebaut. In Figur 4 ist nun der Aktuator 15 etwas genauer dargestellt. Er umfaßt ein Stellglied 85, das eine Spule 35 in einem Magnetfeld 30 ansteuert. Die in das Magnetfeld 30 eingetauchte Spule 35 wird auch als Tauchspule bezeichnet. Das vom Verstärker 55 kommende Aktuatorsignal A wird dabei dem Stellglied 85 zugeführt. In Figur 4 sind die Bestandteile des Aktuators 15 noch genauer dargestellt. Dabei leitet das Stellglied 85 aus dem Aktuatorsignal A einen Spulenstrom S ab, der durch die Spule 35 fließt. Mit der Spule 35 ist dabei die Abtastvorrichtung 1 mechanisch starr verbunden. Eine Bewegung der Spule 35 im Magnetfeld 30 führt somit zu einer entsprechenden Bewegung der Abtastvorrichtung 1. Das Magnetfeld 30 und die Spule 35 sind dabei so angeordnet, daß sich die Spule bei Stromfluß mit der Abtastvorrichtung 1 in Richtung senkrecht zur Ebene des Speichermediums 10 bewegt. Der Aktuatorsimulator 90 entspricht funktional dem Stellglied 85 und leitet aus dem Aktuatorsignal A die sich aus dem Spulenstrom S ergebende Spulenspannung US ab, und gibt sie an die zweite Vergleichsvorrichtung 40 ab. Das Stellglied 85 leitet aus dem Aktuatorsignal A einen Spulenstrom S ab, der geeignet ist, die Spule 35 im Magnetfeld 30 und damit die Abtastvorrichtung 1 so in Richtung senkrecht zur Ebene des Speichermediums 10 zu bewegen, daß der Abstand zwischen der Abtastvorrichtung 1 und dem Speichermedium 10 in dieser Richtung dem vorgegebenen Soll-Wert 75 angenähert bzw. nachgeführt wird.

Durch die beschriebene Anordnung der Spule 35 im Magnetfeld 30 und deren mechanische Verbindung mit der Abtastvorrichtung 1 kann die Spule 35 auch als Sensor für Bewegungen der Abtastvorrichtung 1 in Richtung senkrecht zur Ebene des Speichermediums 10 benutzt werden. In diesem Fall wird nämlich ein Spulenstrom S' in der Spule 35 induziert. Der Spulenstrom S' ist dabei ein Maß für die Beschleunigung der Abtastvorrichtung 1 in Abhängigkeit von auf das Laufwerk 5 einwirkenden Beschleunigungen, da die Spule 35 mit dem Feder-Masse-System der Abtastvorrichtung 1 und ihrer Aufhängung im Laufwerk 5 verbunden ist. Aufgrund der beschriebenen Anordnung der Spule 35 im Magnetfeld 30 können dabei nur Beschleunigungen detektiert werden, die in der gleichen Richtung auftreten, in der auch eine Regelung der Position der Abtastvorrichtung 1 durch den Aktuator 15 möglich ist. Beschleunigungen der Abtastvorrichtung 1 und damit der Spule 35 in Richtungen, die nicht senkrecht zur Ebene des Speichermediums 10 liegen, induzieren keinen Strom in der Spule 35.

Der durch die Beschleunigung der Abtastvorrichtung 1 in der Spule 35 induzierte Strom S' überlagert sich mit dem vom Stellglied 85 gelieferten Spulenstrom S zum Spulengesamtstrom S_{g}, aus dem sich eine Spulengesamtspannung U_{g} an der Spule 35 ergibt. Die Spulengesamtspannung U_{g} wird dabei von der zweiten Vergleichsvorrichtung 40 gemessen. Die zweite Vergleichsvorrichtung 40 subtrahiert dann die vom Aktuatorsimulator 90 empfangene Spulenspannung US von der Spulengesamtspannung U_{g}. Da die vom Aktuatorsimulator 90 gelieferte Spulenspannung US diejenige Spannung ist, die sich an der Spule 35 allein aufgrund des vom Stellglied 85 gelieferten Spulenstroms S an der Spule 35 ergibt, erhält man durch die beschriebene Spannungssubtraktion in der zweiten Vergleichsvorrichtung 40 die induzierte Spannung U', die sich allein aufgrund des induzierten Spulenstroms S' an der Spule 35 ergibt. Die induzierte Spannung U' ist dann wie der induzierte Spulenstrom S' ein Maß für die auf die Abtastvorrichtung 1 wirkenden Beschleunigungen in Richtung senkrecht zur Ebene des Speichermediums 10. Aufgrund des bekannten Feder-Masse-Systems der Abtastvorrichtung 1 und ihrer Aufhängung im Laufwerk 5 lassen sich aus den aufgrund der induzierten Spannung U' ermittelten Beschleunigungen der Abtastvorrichtung 1 in Richtung senkrecht zur Ebene des Speichermediums 10 die Beschleunigungen des Laufwerks 5 in Richtung senkrecht zur Ebene des Speichermediums 10 ermitteln. Aus diesen Beschleunigungen des Laufwerks 5 und den bekannten Massen- und Federkonstanten des in das Laufwerk 5 eingelegten Speichermediums 10 läßt sich dann das Korrektursignal K ableiten, das die aufgrund der Beschleunigungen des Laufwerks 5 zu erwartenden Abweichungen der Abtastvorrichtung 1 von dem Speichermedium 10 in Richtung senkrecht zur Ebene des Speichermediums 10 in der bezüglich der ersten Ausführungsform gemäß Figur 2 beschriebenen Weise verhindern bzw. kompensieren soll.

Durch den Verstärker 55, den Aktuatorsimulator 90, den Aktuator 15, die zweite Vergleichsvorrichtung 40, das zweite Filter 65 und die Verknüpfungsvorrichtung 80 wird somit eine zweite Regelschleife 95 innerhalb der Fokusregelschleife 70 gebildet.

Die Erfindung wurde anhand der Regelung des Abstandes zwischen der Abtastvorrichtung 1 und dem Speichermedium 10 in Richtung senkrecht zur Ebene des Speichermediums 10 beschrieben. In entsprechender Weise läßt sich eine Regelung in einer Richtung in der Ebene des Speichermediums 10 zusätzlich oder alternativ zur beschriebenen Fokusregelung realisieren. Eine Regelung in einer Richtung in der Ebene des Speichermediums 10 wird dabei als Spur- oder Trackingregelung bezeichnet. Die Anzahl der möglichen Richtungen zur Regelung der Position der Abtastvorrichtung 1 entspricht dabei der Anzahl der Freiheitsgrade des Gesamtsystems aus Laufwerk 5 und darin angeordneten Komponenten. Für jede Richtung, in der die Position der Abtastvorrichtung 1 geregelt werden soll, kann gemäß der Erfindung eine Regelungseinrichtung gemäß der beschriebenen Ausführungsform vorgesehen werden.

Dabei wird in jeder dieser Regelungseinrichtungen die Beschleunigung der Abtastvorrichtung 1 bzw. des Laufwerks 5 nur in der Richtung gemessen, in der der Aktuator der entsprechenden Regelungseinrichtung die Position der Abtastvorrichtung 1 verändern kann. Für jede mögliche Regelungsrichtung kann dabei ein entsprechender Beschleunigungssensor, beispielsweise in Form des für die jeweils benötigte Regelungseinrichtung bzw. Regelschleife vorgesehenen Aktuators gemäß der Ausführungsform der Erfindung, zur Ermittlung der Beschleunigungen des Laufwerks 5 oder der Abtastvorrichtung 1 in dieser Regelungsrichtung vorgesehen sein.

Bei der Ausführungsform gemäß dem Stand der Technik aus Figur 2 mißt der Beschleunigungssensor 20 die Beschleunigungen, die auf das Laufwerk 5 wirken, wobei durch Kenntnis der Masse- und Federkonstanten der Abtastvorrichtung 1 die daraus resultierenden Beschleunigungen der Abtastvorrichtung 1 indirekt ermittelt werden können. Es kann jedoch bei der Ausführungsform gemäß dem Stand der Technik aus Figur 2 auch vorgesehen sein, wie auch bei der Ausführungsform der Erfindung durch den Beschleunigungssensor 20 direkt die auf die Abtastvorrichtung 1 wirkenden Beschleunigungen zu messen und daraus in der bezüglich der Ausführungsform der Erfindung beschriebenen Weise die auf das Laufwerk 5 wirkenden Beschleunigungen und die auf das Speichermedium 10 wirkenden Beschleunigungen zu ermitteln, so daß das gebildete Korrektursignal K nach elektronischer Aufbereitung durch das zweite Filter 65 und den Verstärker 55 den Aktuator 15 so ansteuert, daß er eine Abweichung des Abstandes der Abtastvorrichtung 1 vom Speichermedium 10 in der entsprechenden Richtung vom entsprechend vorgegebenen Soll-Wert im wesentlichen verhindert.

Der Innenwiderstand des Stellglieds 85 und der Innenwiderstand des Aktuatorsimulators 90 muß jeweils größer als Null sein, um zu verhindern, daß die durch die auf die Abtastvorrichtung 1 wirkenden Beschleunigungen induzierte Spannung U' an der Spule 35 kurzgeschlossen wird. Dies kann dadurch sichergestellt werden, daß die Spule 35 in Reihe mit einem Widerstand geschaltet wird, um einen nullwertigen Innenwiderstand des Aktuatorsimulators 90 und des Stellglieds 85 zu verhindern. Der Widerstand kann dabei beispielsweise etwa 5-10% des Wertes des Spulenwiderstands der Spule 35 betragen.

## Patentansprüche

1. Verfahren zur Regelung der Nachführung einer Abtastvorrichtung (1), insbesondere eines Schreib-/Lesekopfes, eines Laufwerkes (5) für Speichermedien (10), wobei eine gemessene Position der Abtastvorrichtung (1) bezüglich eines in das Laufwerk (5) eingeführten Speichermediums (10) mit einer vorgegebenen Position verglichen wird und wobei in Abhängigkeit des Vergleichsergebnisses mindestens ein Aktuator (15) so angesteuert wird, daß die Abtastvorrichtung (1) in Richtung der vorgegebenen Position bewegt wird, wobei auf die Abtastvorrichtung (1) einwirkende externe Beschleunigungen in einer Bewegungsrichtung des mindestens einen Aktuators (15) gemessen werden und wobei aus den gemessenen Beschleunigungen ein Korrektursignal abgeleitet und dem mindestens einen Aktuator (15) zugeführt wird, wobei der Aktuator (15) durch das Korrektursignal derart angesteuert wird, daß er den auf die Abtastvorrichtung (1) wirkenden Beschleunigungen entgegenwirkt, **dadurch gekennzeichnet, daß** der mindestens eine Aktuator (15) als Beschleunigungssensor (20) verwendet wird.

2. Verfahren nach Anspruch 1, **dadurch gekennzeichnet, daß** die auf die Abtastvorrichtung (1) wirkenden Beschleunigungen durch mindestens einen weiteren Beschleunigungssensor (20) gemessen werden.

3. Laufwerk (5) für Speichermedien (10) mit einer Abtastvorrichtung (1), insbesondere einem Schreib-/Lesekopf, zur Abtastung eines in das Laufwerk (5) eingelegten Speichermediums (10), mit mindestens einem Positionssensor (50) zum Messen einer Position der Abtastvorrichtung (1) bezüglich des in das Laufwerk (5) eingeführten Speichermediums (10), mit einer ersten Vergleichsvorrichtung (25) zum Vergleich der gemessenen Position mit einer vorgegebenen Position und mit mindestens einem Aktuator (15), der von der ersten Vergleichsvorrichtung (25) in Abhängigkeit des Vergleichsergebnisses so angesteuert wird, daß die Abtastvorrichtung (1) in Richtung der vorgegebenen Position bewegt wird, wobei das Laufwerk (5) Mittel (15; 20) umfaßt, die auf die Abtastvorrichtung (1) einwirkende externe Beschleunigungen in einer Bewegungsrichtung des mindestens einen Aktuators (15) messen, aus den gemessenen Beschleunigungen ein Korrektursignal ableiten und dem mindestens einen Aktuator (15) zuführen, wobei der Aktuator (15) durch das Korrektursignal derart angesteuert wird, daß er den auf die Abtastvorrichtung (1) wirkenden Beschleunigungen entgegenwirkt, **dadurch gekennzeichnet, daß** die Mittel (15; 20) zum Messen der Beschleunigungen den mindestens einen Aktuator (15) als Beschleunigungssensor umfassen.

4. Laufwerk (5) nach Anspruch 3, **dadurch gekennzeichnet, daß** die Mittel (15; 20) zur Messung der Beschleunigungen mindestens einen weiteren Beschleunigungsensor (20) umfassen.

5. Laufwerk (5) nach Anspruch 3 oder 4, **dadurch gekennzeichnet, daß** der mindestens eine Aktuator (15) eine in einem Magnetfeld (30) angeordnete Tauchspule (35) umfaßt, die mit der Abtastvorrichtung (1) verbunden ist, so daß sich die Tauchspule (35) bei Beschleunigung der Abtastvorrichtung (1) im Magnetfeld (30) bewegt, wobei ein Spulenstrom induziert wird, daß das Laufwerk (5) eine zweite Vergleichsvorrichtung (40) umfaßt, die die induzierte Spulenspannung von der gesamten an der Spule (35) anliegenden Spannung extrahiert und von der induzierten Spulenspannung das Korrektursignal ableitet und dem mindestens einen Aktuator (15) zur Kompensation der Beschleunigung zuführt.

6. Laufwerk (5) nach Anspruch 5, **dadurch gekennzeichnet, daß** die zweite Vergleichsvorrichtung (40) von der gesamten an der Spule (35) anliegenden Spannung die durch die Ansteuerung des Aktuators (15) an der Spule (35) anliegende Spannung subtrahiert und auf diese Weise die durch die Beschleunigung induzierte Spulenspannung extrahiert.

## Claims

1. Method for regulating the tracking of a scanning device (1), in particular of a read/write head, of a drive (5) for storage media (10), a measured position of the scanning device (1) with respect to a storage medium (10) introduced into the drive (5) being compared with a predetermined position, and at least one actuator (15) being driven in a manner dependent on the comparison result in such a way that the scanning device (1) is moved in the direction of the predetermined position, external accelerations - acting on the scanning device (1) - in a direction of movement of the at least one actuator (15) being measured and a correction signal being derived from the measured accelerations and being fed to the at least one actuator (15), the actuator (15) being driven by the correction signal in such a way that it counteracts the accelerations acting on the scanning device (1), **characterized in that** the at least one actuator (15) is used as an acceleration sensor (20).

2. Method according to Claim 1, **characterized in that** the accelerations acting on the scanning device (1) are measured by at least one further acceleration sensor (20).

3. Drive (5) for storage media (10) having a scanning device (1), in particular a read/write head for scanning a storage medium (10) inserted into the drive (5), having at least one position sensor (50) for measuring a position of the scanning device (1) with respect to the storage medium (10) introduced into the drive (5), having a first comparison device (25) for comparing the measured position with a predetermined position, and having at least one actuator (15), which is driven by the first comparison device (25) in a manner dependent on the comparison result in such a way that the scanning device (1) is moved in the direction of the predetermined position, the drive (5) comprising means (15; 20) which measure external accelerations - acting on the scanning device (1) - in a direction of movement of the at least one actuator (15), derive a correction signal from the measured accelerations and feed the said correction signal to the at least one actuator (15), the actuator (15) being driven by the correction signal in such a way that it counteracts the accelerations acting on the scanning device (1), **characterized in that** the means (15; 20) for measuring the accelerations comprise the at least one actuator (15) as an acceleration sensor.

4. Drive (5) according to Claim 3, **characterized in that** the means (15; 20) for measuring the accelerations comprise at least one further acceleration sensor (20).

5. Drive (5) according to Claim 3 or 4, **characterized in that** the at least one actuator (15) comprises a plunger-type coil (35), which is arranged in a magnetic field (30) and is connected to the scanning device (1), so that the plunger-type coil (35) moves in the magnetic field (30) in the event of acceleration of the scanning device (1), a coil current being induced, **in that** the drive (5) comprises a second comparison device (40), which extracts the induced coil voltage from the total voltage present across the coil (35) and derives the correction signal from the induced coil voltage and feeds the said correction signal to the at least one actuator (15) for compensation of the acceleration.

6. Drive (5) according to Claim 5, **characterized in that** the second comparison device (40) subtracts the voltage present across the coil (35) as a result of the driving of the actuator (15) from the total voltage present across the coil (35) and, in this way, extracts the coil voltage induced by the acceleration.

## Revendications

1. Procédé pour réguler l'asservissement d'un dispositif de balayage (1), notamment d'une tête d'écriture/lecture d'un lecteur (5) de support d'enregistrement (10) selon lequel
- on compare une position mesurée du dispositif de balayage (1) par rapport à un support d'enregistrement (10) introduit dans le lecteur (5) avec une position prédéterminée et
- en fonction du résultat de la comparaison on commande au moins un actionneur (15) pour que le dispositif de balayage (1) soit déplacé dans la direction de la position prédéterminée,
- on mesure les accélérations externes agissant sur le dispositif de balayage (1) dans une direction de mouvement de l'actionneur (15) et
- à partir des accélérations mesurées on déduit un signal de correction et on l'applique à au moins cet actionneur (15),
- l'actionneur (15) étant commandé par le signal de correction de façon qu'il s'oppose aux accélérations agissant sur le dispositif de balayage (1),
**caractérisé en ce qu'**
au moins cet actionneur (15) est utilisé comme capteur d'accélération (20).

2. Procédé selon la revendication 1,
**caractérisé en ce que**
les accélérations agissant sur le dispositif de détection (1) sont mesurées par au moins un autre capteur d'accélération (20).

3. Lecteur (5) pour les supports d'enregistrement (10) comportant un dispositif de balayage (1), notamment une tête d'écriture/lecture pour balayer un support d'enregistrement (10) placé dans le lecteur (5), au moins un capteur de position (50) pour mesurer une position du dispositif de balayage (1) par rapport au support d'enregistrement (10) introduit dans le lecteur (5), au moins un dispositif de comparaison (25) pour comparer la position mesurée à une position prédéterminée et au moins un actionneur (15) commandé par le premier dispositif de comparaison (25) en fonction des résultats de la comparaison, le dispositif de balayage (1) étant déplacé en direction de la position prédéterminée, le lecteur (5) comportant des moyens (15, 20) qui mesurent les accélérations externes agissant sur le dispositif de détection (1) dans une direction de mouvement d'au moins un actionneur (15) pour déduire un signal de correction à partir des accélérations mesurées et les fournir à au moins un actionneur (15),
l'actionneur (15) étant commandé par le signal de correction de façon à s'opposer aux accélérations agissant sur le dispositif de balayage (1),
**caractérisé en ce que**
les moyens (15, 20) pour mesurer les accélérations comprennent au moins un actionneur (15) comme capteur d'accélération.

4. Lecteur (5) selon la revendication 3,
**caractérisé en ce que**
les moyens (15 ; 20) pour mesurer les accélérations comprennent au moins un autre capteur d'accélération (20).

5. Lecteur (5) selon la revendication 3 ou 4,
**caractérisé en ce qu'**
au moins un actionneur (15) comprend au moins une bobine plongeuse (35) placée dans un champ magnétique (30) et reliée au dispositif de détection (1) de façon que la bobine plongeuse (35) se déplace dans le champ magnétique (30) lors de l'accélération du dispositif de balayage (1), pour induire un courant dans la bobine,
le lecteur (5) comportant un second dispositif de comparaison (40) qui extrait la tension de bobine induite par la tension totale appliquée à la bobine (35) et déduit de la tension de bobine induite, le signal de correction et le fournit à au moins un actionneur (15) pour compenser l'accélération.

6. Lecteur (5) selon la revendication 5,
**caractérisé en ce que**
le second dispositif de comparaison (40) soustrait de la tension totale appliquée à la bobine (35), celle appliquée à la bobine (35) par la commande de l'actionneur (15) et extrait de cette manière la tension de bobine induite par l'accélération.
